(19) Europäisches Patentamt
European Patent Office
Office européen des brevets

(11) **EP 4 168 791 B1**

(12) **FASCICULE DE BREVET EUROPEEN**

(45) Date de publication et mention
de la délivrance du brevet:
**14.08.2024 Bulletin 2024/33**

(21) Numéro de dépôt: **21740131.4**

(22) Date de dépôt: **17.06.2021**

(51) Classification Internationale des Brevets (IPC):
**B08B 17/02** *(2006.01)*     **G01N 29/036** *(2006.01)*
**B08B 7/02** *(2006.01)*

(52) Classification Coopérative des Brevets (CPC):
**G01N 29/036; B08B 7/02; B08B 17/02;**
G01N 2291/0258

(86) Numéro de dépôt international:
**PCT/FR2021/051098**

(87) Numéro de publication internationale:
**WO 2021/255396 (23.12.2021 Gazette 2021/51)**

(54) **CAPTEUR ENVIRONNEMENTAL IMMERGÉ INTÉGRANT DES MOYENS ANTI-ENCRASSEMENT**

EINGETAUCHTER UMWELTSENSOR MIT MITTELN GEGEN VERSCHMUTZUNG

IMMERSED ENVIRONMENTAL SENSOR COMPRISING ANTIFOULING MEANS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.06.2020 FR 2006432**

(43) Date de publication de la demande:
**26.04.2023 Bulletin 2023/17**

(73) Titulaire: **Commissariat à l'énergie atomique
et aux énergies alternatives
75015 Paris (FR)**

(72) Inventeurs:
• **CASSET, Fabrice
38054 GRENOBLE CEDEX 09 (FR)**
• **ALAVA, Thomas
38054 GRENOBLE CEDEX 09 (FR)**

(74) Mandataire: **Brevalex
Tour Trinity
1 B Place de la Défense
92400 Courbevoie (FR)**

(56) Documents cités:
**EP-A1- 3 715 826**     **WO-A1-2019/194166**
**KR-A- 20160 081 256**     **US-A1- 2006 032 290**
**US-A1- 2008 035 180**     **US-A1- 2016 244 715**
**US-B1- 8 018 121**

## Description

### DOMAINE TECHNIQUE ET ÉTAT DE LA TECHNIQUE ANTÉRIEURE

La présente invention se rapporte à un procédé de commande d'un capteur environnemental en milieu liquide intégrant des moyens anti-encrassement.

Un capteur environnemental en milieu liquide peut être destiné à contrôler les propriétés du milieu, par exemple son pH, sa densité... ou à mesurer des caractéristiques diverses telles que la turbidité, la présence d'espèces chimiques ou de certaines souches de bactéries, etc...

Ces capteurs peuvent être utilisés en milieu industriel, par exemple ils peuvent être immergés dans des cuves, des conduits ou en milieu naturel, tel que les mers, les océans, les fleuves et les canaux. Un grand nombre de capteurs environnementaux immergés est utilisé. Ces capteurs sont souvent mis en oeuvre sur des structures déjà existantes, comme les plateformes offshores ou les navires, mais peuvent aussi faire partie de stations océanographiques dédiées. Ils sont également utilisés pour le contrôle des réseaux d'acheminement des eaux potables et pour le contrôle des eaux fluviales.

Le document « Conception et simulation d'un micro-capteur à ondes de love par éléments finis », Hallili et al. J3eA, January 2015 disponible sur le site http://dx.doi.org/10.1051/j3ea/2015018 décrit un capteur à ondes de Love pour la détection d'espèces gazeuses en milieu liquide. Comportant un substrat piézoélectrique et deux paires de peignes interdigités, une paire de peignes formant un émetteur et une paire de peignes formant un récepteur. Entre les deux paires de peignes, une zone de collecte des espèces gazeuses est ménagée, cette zone est désignée « gap ». L'émetteur génère une onde de Love grâce à l'effet piézo-électrique. L'onde se déplace à travers le gap en direction du récepteur, un maximum d'énergie est confiné dans la couche guidante. Après un certain temps (temps de retard), l'onde acoustique arrive sur le récepteur et elle est convertie en un signal électrique. La vitesse de propagation ou l'amplitude varie en fonction des espèces déposées sur le gap. La surface du gap est généralement recouverte d'une couche sensible adaptée à l'accroche de façon spécifique d'une cible chimique ou biologique.

Or toute surface immergée dans un liquide, tel que l'eau de mer et l'eau douce, est sujette au dépôt et à l'adhésion d'organismes qui peuvent être des bactéries, des algues ou encore des mollusques. Ce phénomène est connu sous le nom de bio-encrassement ou biofouling en terminologie anglo-saxonne. Lorsque les conditions environnementales sont réunies, l'adhésion de microorganismes sur les matériaux et leur multiplication conduit à la formation d'un film en surface des matériaux. La formation de ce film se déroule en plusieurs étapes et peut être particulièrement rapide, par exemple quelques minutes.

La qualité des mesures réalisées par les capteurs immergés peut être affectée par le biofouling se formant sur leur surface sensible après seulement quelques jours. Le gap du capteur à ondes de Love sera recouvert rapidement par un biofilm qui va modifier la propagation des ondes de Love.

C'est pourquoi des solutions anti-fouling sont nécessaires pour obtenir une qualité de données constante et diminuer la maintenance nécessaire à leur nettoyage. Les systèmes anti-fouling sont soit de type chimique, soit de type mécanique. Les systèmes de type chimique consistent en l'application d'un revêtement chargé en biocides sur la surface à protéger. La toxicité des biocides contenus dans le revêtement permet de repousser et détruire les micro-organismes. Ces systèmes sont polluants, en outre ils libèrent des biocides jusqu'à épuisement, devenant alors inefficaces.

Les systèmes de type mécanique utilisent par exemple un essuie-glace afin de retirer les micro-organismes déposés sur la surface sensible. Or l'essuie-glace lui-même est sujet au biofouling. En outre il requiert une certaine maintenance pour rester efficace.

Un autre état de la technique est connu par le brevet US 8,018, 121 B1 et les demandes de brevet US 2006/0032290 A1, EP 3 715 826 A1, qui divulguent des capteurs environnementaux comportant un support, dont une face comporte une zone sensible configurée pour recevoir au moins une espèce d'intérêt, des moyens anti-encrassement configurés pour mettre en vibration au moins la zone sensible, lesdits moyens anti-encrassement étant portés par le support, et des moyens de détection de la présence d'au moins une espèce d'intérêt sur la zone sensible, lesdits moyens de détection étant portés par le support, dans lequel les moyens anti-encrassement sont configurés pour localiser la au moins une espèce d'intérêt sur la zone sensible.

### EXPOSÉ DE L'INVENTION

C'est par conséquent un but de la présente invention d'offrir un procédé de commande d'un capteur environnemental immergé présentant une protection contre le biofouling améliorée.

Le but énoncé ci-dessus est atteint par un procédé de commande tel que défini dans la revendication 1, ledit procédé comportant en particulier une étape d'utilisation d'un capteur environnemental comportant un support portant une surface dont une partie forme une zone de mesure, des premiers moyens pour mettre en vibration au moins ladite surface de mesure afin d'éviter ou au moins limiter la formation d'un film de biofouling et des deuxièmes moyens pour effectuer une mesure dans la zone de mesure au moyen de la génération d'une onde.

La mesure consiste par exemple à mesurer des espèces chimiques ou biologiques contenues dans le liquide dans lequel le capteur est immergé.

Grâce à l'invention, le développement de microorganismes sur la zone de mesure est empêché ou les microorganismes déjà déposés sont enlevés ; et la mesure des espèces d'intérêt, par exemple par propagation d'une onde n'est pas faussée par la présence d'un biofilm.

Les ondes pouvant être utilisées pour la mesure sont par exemple des ondes de Love ou de Rayleigh.

La zone de mesure est par exemple mise en vibration selon un mode hors-plan ou un mode de Lamb. Avantageusement, plusieurs modes sont excités à différentes fréquences afin d'éviter des zones immobiles, qui permettraient au biofouling de se développer.

Dans un exemple de réalisation, un seul actionneur assure à la fois la fonction anti-fouling et la fonction mesure, le signal de commande excitant l'actionneur à plusieurs fréquences.

Dans un exemple de réalisation, les premiers moyens assurent également le guidage des espèces à mesurer dans la zone de mesure.

En d'autres termes, le capteur environnemental utilisé dans le procédé selon l'invention intègre sur un même support des moyens pour limiter, voir éviter, le biofilm et des moyens pour mesurer les espèces d'intérêt dans le liquide dans lequel est immergé le capteur. Ainsi il est possible de conserver un support de mesure optimal pour la mesure, dans un encombrement réduit.

Le capteur environnemental utilisé dans le procédé selon l'invention comporte un support, dont une face comporte une zone sensible configurée pour recevoir des espèces d'intérêt, des moyens anti-encrassement configurés pour mettre en vibration au moins la zone sensible, lesdits moyens anti-encrassement étant portés par le support, et des moyens de détection de la présence d'au moins une espèce d'intérêt sur la zone sensible, lesdits moyens de détection étant portés par le support.

De préférence, les moyens anti-encrassement sont configurés pour mettre en vibration au moins la zone sensible dans un mode de vibration hors-plan.

Les moyens anti-encrassement sont avantageusement configurés pour mettre en vibration au moins la zone sensible dans un mode de plaque, par exemple un mode de Lamb.

Les moyens de détection sont préférentiellement configurés pour mettre en oeuvre des ondes de surface.

Dans un exemple, les moyens de détection comportent un émetteur d'ondes de surface propagatives disposé d'un côté de la zone sensible et un récepteur d'ondes de surface propagatives émises par l'émetteur disposés d'un autre côté de la zone sensible.

Dans un autre exemple, les moyens de détection comportent des moyens pour générer une onde stationnaire dans la zone sensible et pour mesurer une variation de la fréquence de résonance de l'onde stationnaire.

Selon une caractéristique additionnelle, les moyens de détection comportent également sur la zone sensible un capteur graphène, et/ou un capteur de type de transistor à effet de champ sensible aux variations de concentration en ions, et/ou un capteur électrochimique.

Le capteur peut comporter des moyens formant à la fois les moyens anti-encrassement et les moyens de détection.

Selon l'invention, les moyens anti-encrassement sont configurés pour confiner la au moins une espèce d'intérêt sur la zone sensible.

Dans un exemple avantageux, la zone sensible comporte une couche de fonctionnalisation configurée pour capturer la au moins une espèce d'intérêt.

Dans un exemple de réalisation, le capteur environnemental fait partie d'un système de détection comportant une unité de commande configurée pour envoyer un premier signal de commande aux moyens anti-encrassement de sorte à retirer des microorganismes sur la zone sensible et/ou empêcher leur prolifération sur la zone sensible, et un deuxième signal de commande aux moyens de détection pour effectuer une détection de la au moins une espèce d'intérêt.

L'unité de commande peut être configurée pour appliquer aux moyens anti-encrassement un balayage en fréquence dans une gamme de fréquence excitant le support suivant différents modes de Lamb.

Dans un exemple de réalisation, l'unité de commande est configurée pour activer les moyens anti-encrassement avant chaque activation des moyens de détection.

L'unité de commande peut être configurée pour collecter un signal émis par les deuxièmes moyens.

Selon un autre exemple, l'unité de commande est configurée pour activer les moyens anti-encrassement de sorte à localiser ladite au moins une espèce d'intérêt sur la zone sensible.

Le procédé de commande d'un capteur environnemental selon la présente demande comporte au moins les étapes définies dans la revendication 1.

Le procédé de commande peut prévoir l'activation des moyens anti-encrassement pour localiser la au moins une espèce d'intérêt sur la zone sensible par l'application aux moyens anti-encrassement d'un balayage en fréquence dans une gamme de fréquence excitant le support suivant différents modes de Lamb.

**BRÈVE DESCRIPTION DES DESSINS**

La présente invention sera mieux comprise sur la base de la description qui va suivre et des dessins en annexe sur lesquels:

La figure 1 est une représentation schématique d'un exemple de capteur environnemental, dans lequel les moyens de détection mettent en oeuvre une onde propagative.

Les figures 2A, 2B et 2C sont des représentations schématiques de plaques rectangulaires excitées selon un mode de Lamb à différentes fréquences.

La figure 3 est une représentation schématique d'un autre exemple de capteur environnemental, dans lequel les moyens de détection mettent en oeuvre une onde propagative.

La figure 4 est une représentation schématique d'un exemple de capteur environnemental, dans lequel les moyens de détection mettant en oeuvre une onde propagative comportent des peignes interdigités.

La figure 5 est une représentation schématique d'un autre exemple de capteur environnemental, dans lequel les moyens de détection mettent en oeuvre une onde stationnaire.

La figure 6 représente une localisation de particules d'intérêt sur un support rectangulaire excité dans un mode de Lamb à 100 kHz.

La figure 7 représente une localisation de particules d'intérêt sur un support en forme de disque excité dans un mode hors-plan à différentes fréquences.

La figure 8 est un exemple de support muni de moyens anti-encrassement permettant la mise en vibration du support selon plusieurs modes.

La figure 9A est une représentation du support de la figure 8 excité dans un mode de Lamb.

La figure 9B est une représentation du support de la figure 8 excité dans un 1$^{er}$ mode hors-plan.

Les figures 10A, 10B, 10C, 10D, 10E et 10F sont des représentations schématiques des éléments obtenus lors de différentes étapes d'un exemple de procédé de fabrication d'un capteur environnemental selon l'invention.

## EXPOSÉ DÉTAILLÉ DE MODES DE RÉALISATION PARTICULIERS

La présente demande porte sur un procédé de commande d'un capteur environnemental présentant une protection contre le biofouling ou l'encrassement améliorée.

Dans la présente demande, on entend par « capteur environnemental » un capteur destiné à détecter des espèces d'intérêt contenues dans l'environnement liquide, dans lequel il est immergé (chimique ou biologique).

Les espèces d'intérêt ou cibles sont sous forme de particules qui vont se fixer sur une zone sensible du capteur. La surface du capteur présente des propriétés d'adhérence par rapport aux espèces d'intérêt.

Le biofouling peut apparaître dans l'eau de mer, l'eau douce contenu dans les lacs, les fleuves, les rivières, les réserves naturelles et artificielles des réseaux urbains. Le système de mesure est adapté pour une utilisation dans de tels milieux.

Le capteur environnemental est destiné à être immergé dans l'eau, soit de l'eau de mer, soit de l'eau douce, voire dans un autre liquide.

Les termes «encrassement» et «biofouling» seront considérés comme synonymes dans la présente demande.

Les termes «biofilm» et «biofouling» seront considérés comme synonymes dans la présente demande.

On entend par « action anti-fouling » ou « action anti-encrassement » le fait d'empêcher la formation d'un biofilm et/ou de retirer le biofilm qui s'est formé.

Le capteur peut être de différents types. Il peut être destiné à suivre des paramètres comme le taux d'oxygène dissous, la turbidité, la conductivité, le pH ou encore la fluorescence, la présence, voir la concentration en certaines espèces chimiques ou biologiques. Le pH est par exemple déterminé par mesure directe des ions $H_3O^+$ qui se fixent sur la zone sensible.

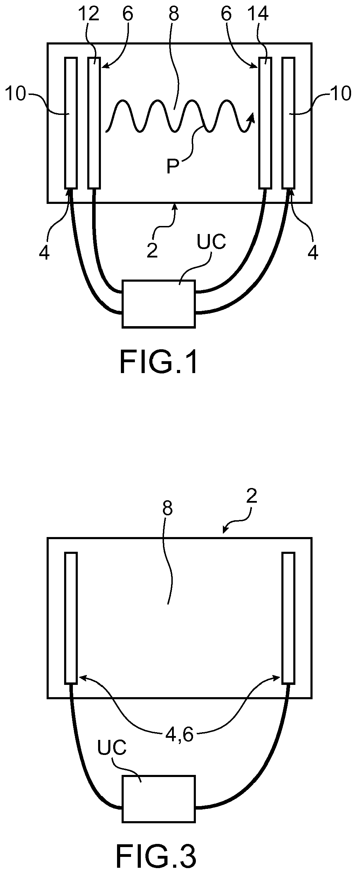

Sur la figure 1, on peut voir une représentation schématique d'un exemple de capteur environnemental comportant un support 2, dans l'exemple représenté il s'agit d'une plaque rectangulaire, des premiers moyens 4 désignés moyens anti-encrassement et des deuxièmes moyens 6 désignés moyens de détection.

Les moyens anti-encrassement 4 sont de préférence disposés par rapport au moyens de détection 6 de sorte que toute la zone sensible soit soumise à l'action des moyens anti-encrassement. Les moyens d'anti-encrassement peuvent être positionnés soit sur la même face que les moyens de détection, soit sur la face opposée.

Le capteur comporte au moins une zone sensible 8 portée par une face du support. La zone sensible 8 est la surface qui permet au capteur de collecter les particules de la ou des espèces d'intérêt à détecter.

Dans l'exemple représenté, la zone sensible 8 est au centre du support et les moyens anti-encrassement et les moyens de détection encadrent la zone sensible 8.

Dans un exemple de réalisation, la zone sensible 8 comporte une couche sensible (non représentée) adaptée à la détection d'espèces d'intérêt, cette couche est appelée « couche de fonctionnalisation biologique ». Par exemple elle comporte des macromolécules biologiques ayant la propriété d'accrocher de façon spécifique une cible chimique ou biologique.

Les macromolécules peuvent être des brins d'ADN, d'ARN ou des protéines possédant une fonction de reconnaissance spécifique, telles que les lectines, enzymes, immunoglobulines. La couche de fonctionnalisation permet d'avoir des bio-récepteurs à la surface du support, qui sont spécifiques à une ou plusieurs espèces ciblées. Ces bio-récepteurs présentent avec cette cible une grande affinité, qui est qualifiée de reconnaissance spécifique. Des particules et/ou des micro-organismes, notamment ceux à l'origine du biofouling, autres que ceux que l'on souhaite détecter, pourront se greffer sur la couche de fonctionnalisation de façon non-spécifique, principalement via des interactions électrostatiques principalement. Cependant l'affinité de ces liaisons non spécifiques est beaucoup plus faible, par exemple de plusieurs ordres de grandeurs, que l'affinité caractérisant la réaction de reconnaissance spécifique. Le taux d'accroche de ces organismes non spécifiques sur la zone de fonctionnalisation serait de même caractéristique que l'accroche sur les autres parties du support (en dehors de la zone sensible), celui-ci est beaucoup moins favorisé que l'accroche des espèces spécifiques ciblés par la fonctionnalisation.

Selon un exemple, la couche de fonctionnalisation comporte des fragments variables simple chaîne ou scFV (Single Chain Variable Fragment en terminologie anglo-saxonne), qui sont des protéines de fusion permettant d'avoir un site de reconnaissance particulier, offrant une grande affinité avec le peptide ayant l'antigène correspondant au fragment de scFV (par ex. AR-GCN4), comme cela est décrit dans le document « A label-free immunosensor array using single-chain antibody fragments » Natalija Backmann et al. in PNAS, October 11, 2005, vol. 102, no. 41, 14587-14592.

Selon un autre exemple, la couche de fonctionnalisation comporte un anticorps polyclonal PAb contre l'ochratoxine A, permettant de détecter l'ochratoxine A, appelé mycotoxine, comme cela est décrit dans le document "An electrochemical immunosensor for ochratoxin A based on immobilization of antibodies on diazonium-functionalized gold electrode" Abd-Elgawad Radia et al.in Electrochimica Acta 54 (2009) 2180-2184.

Selon un autre exemple, la couche de fonctionnalisation comporte de la lectine (groupe de protéines) et en particulier la Concanavaline A permettant de détecter l'Escherichia Coli, comme cela est décrit dans le document « Detection of Escherichia coli with a label-free impedimetric biosensorbased on lectin functionalized mixed self-assembled monolayer » Haiying Yanga et al, in Sensors and Actuators 8 229 (2016) 297-304.

Les moyens d'anti-encrassement sont tels qu'ils mettent en vibration le support afin qu'il imprime une accélération aux microorganismes adhérents et qu'il provoque leur détachement.

Le support 2 présente une épaisseur suffisamment faible pour présenter des vibrations significatives. L'épaisseur du support 2 est fonction du matériau du support et de ces propriétés mécaniques. Par exemple, pour un support en polymère ou en verre, l'épaisseur du support peut être de plusieurs mm, voire de plusieurs dizaines de mm. Dans le cas d'un support en silicium, son épaisseur est avantageusement inférieure au mm ou à quelques mm.

Dans l'exemple représenté, les moyens d'anti-encrassement comportent deux actionneurs électromécaniques 10 sous forme de bande, disposés sur la face du support 2 portant la zone sensible, et s'étendant chacun le long d'un bord du support 2. Les actionneurs 10 sont avantageusement piézoélectriques ou ferroélectriques, par exemple en PZT, en AIN, en ZnO. La mise en oeuvre d'actionneurs piézoélectriques ou ferroélectriques permet une bonne intégration du système et assure un bon couplage entre les actionneurs et le support. Les actionneurs 10 comprennent chacun des électrodes et un élément en matériau piézoélectrique ou ferroélectrique disposé entre et en contact électrique avec les deux électrodes.

En variante, les actionneurs électromécaniques peuvent être magnétiques, électro-actifs, à mémoire de forme.

En variante, chaque actionneur est remplacé par plusieurs actionneurs disposés parallèlement à un bord du support.

En variante, les actionneurs 10 sont situés sur la face du support opposée à celle portant la zone sensible 8.

Les moyens anti-encrassement 4 et les moyens de détection 6 sont destinés à être reliés à une source d'énergie et à une unité de commande UC. L'ensemble capteur environnemental, unité de commande et source d'énergie forme un système de détection.

Les électrodes des actionneurs 10 sont destinées à être reliées à une source de tension alternative commandée par l'unité de commande UC. L'application d'une différence de potentiel entre les électrodes induit un champ électrique dans une direction hors-plan, i.e. normale à la plaque. Par effet piézoélectrique inverse, le champ électrique provoque la déformation du matériau piézoélectrique dans la direction hors-plan, et dans le plan de la plaque. Cette déformation dans le plan induit un couple mécanique qui va déformer la plaque par effet bilame. En appliquant une tension alternative, la plaque est mise en vibration. De préférence, les actionneurs sont dimensionnés et disposés sur le support 2, de sorte à générer un mode de vibration de la plaque apte à assurer une action anti-fouling.

Par exemple, les actionneurs 10 excitent le support 2 dans son premier mode de vibration hors-plan ou dans un mode de plaque, par exemple un mode de Lamb.

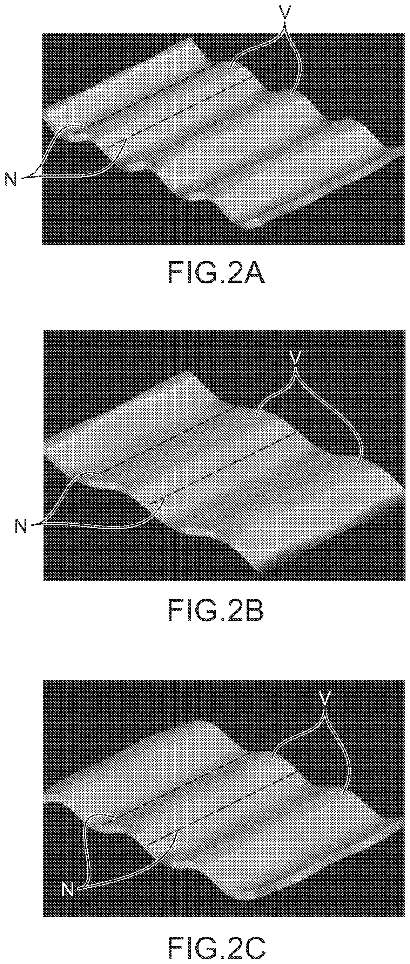

Sur les figures 2A à 2C on peut voir représentés des supports excités suivant des modes de Lamb à trois fréquences différentes avec des ventres V et des noeuds N. Les actionneurs 10 sont sous forme de bande et sont parallèles aux ventres et aux noeuds. Pour une plaque de 30 mm × 20 mm. Sur la figure 2A, la fréquence d'excitation est de 175,4 kHz, sur la figure 2B, la fréquence d'excitation est de 64 kHz et sur la figure 2C, la fréquence d'excitation est de 132 kHz.

De préférence, la fréquence de la tension d'alimentation des actionneurs 10 est choisie pour que la plaque vibre à une fréquence de résonance du premier mode de vibration hors-plan ou du mode de Lamb, ce qui permet de maximiser la vibration de la plaque. Un capteur dans lequel la plaque ne vibre pas à sa fréquence de résonance ne sort pas du cadre de la présente invention.

Le mode de Lamb étant un mode stationnaire, il est avantageusement prévu d'exciter la plaque suivant des modes de Lamb à différentes fréquences dont les ventres et les noeuds sont à des emplacement différents, permettant d'obtenir une action anti-fouling uniforme sur la plaque.

Dans cet exemple, les moyens de détection mettent en oeuvre des ondes de surface, par exemple des ondes de Love ou des ondes de Rayleigh, qui sont émises dans la zone sensible 8, et dont les caractéristiques dépendent de l'état de la zone sensible.

Dans l'exemple représenté sur la figure 1, les moyens de détection comportent un émetteur 12 pour générer une onde propagative d'un côté de la zone sensible, et un récepteur 14 pour recevoir l'onde de l'autre côté de l'onde sensible.

L'émetteur 12 reçoit un signal électrique impulsionnel ou sinusoïdal de l'unité de commande UC, et génère une onde de surface, par exemple une onde de Love dans la zone sensible. Le récepteur 14 convertit l'onde en un signal électrique qui est collecté par l'unité de commande UC. La présence des particules cibles sur la couche sensible qui se situe sur le chemin acoustique engendre un effet de masse, qui perturbe l'onde. La mesure de ces perturbations permet de détecter des particules cibles et de remonter à leur concentration liée au pourcentage de l'effet de masse.

Par exemple la zone sensible 8 comporte une base en matériau piézoélectrique, dans laquelle l'onde de surface est générée par effet piézo-électrique. En variante, l'onde se propage directement dans le support.

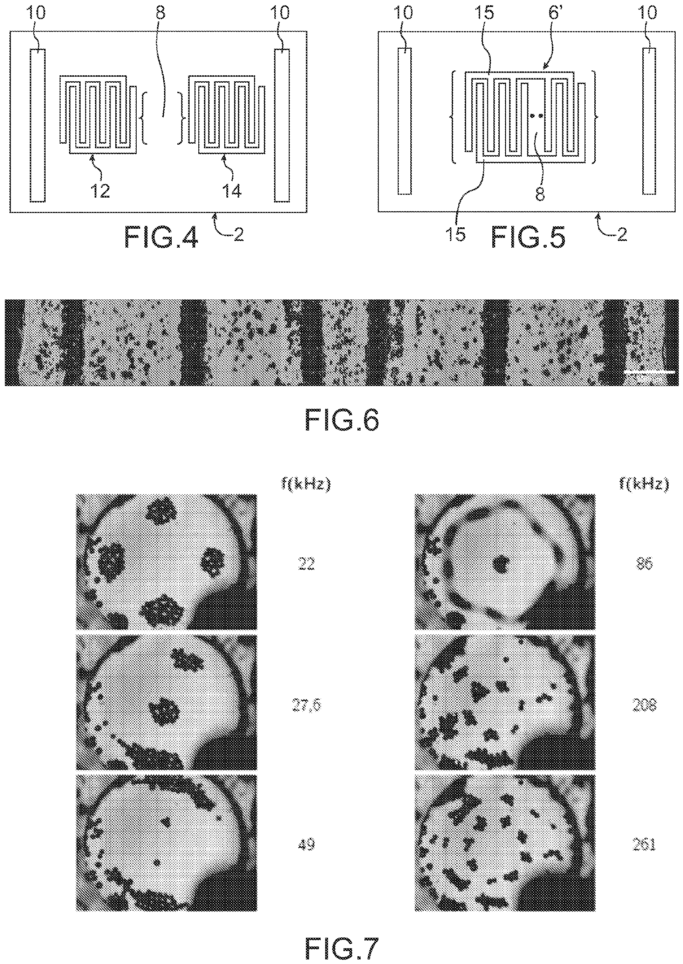

De préférence, l'émetteur 12 et le récepteur 14 comportent par exemple chacun une paire de peignes interdigités comme cela est représenté sur la figure 4.

Dans un autre exemple, l'émetteur et le récepteur sont sous forme de bandes piézoélectriques et leur impédance est mesurée. Cette mesure permet d'obtenir la fréquence de résonance du système et/ou son facteur de qualité à la résonance. Un décalage de ces grandeurs permet de déterminer les particules adhérant sur la zone d'intérêt. La mesure du facteur de qualité est par exemple réalisée en mesurant l'épaisseur du pic à mi-hauteur de l'amplitude maximale ou FWHM (full width at half maximum en terminologie anglo-saxonne), le facteur de qualité Q. = Fréquence de résonance / FWHM. Ainsi lors de l'acquisition de la courbe de résonance, on peut obtenir la fréquence de résonance mais également le facteur de qualité. Le facteur de qualité est également une mesure de l'énergie dissipée par le résonateur pendant chaque cycle vibratoire. Si une couche de matière (par exemple biologique) s'accroche à la surface du résonateur, cette couche va augmenter l'énergie qui est dissipée par le résonateur à chaque cycle vibratoire, ce qui diminue le facteur de qualité.

Dans un autre exemple, le capteur comporte des piézorésistances à la surface du support, celles-ci génèrent un signal électrique périodique synchronisé sur l'onde généré.

Sur la figure 3, on peut voir un autre mode de réalisation dans lequel les moyens anti-encrassement et les moyens de détection sont formés par les mêmes actionneurs. Les actionneurs sont par exemple chacun des rectangles ou une série de carrés ou de rectangles, par lesquels on peut actionner le support, mais également effectuer les mesures, par ex par le suivi de l'impédance comme cela a été décrit ci-dessus.

Dans l'exemple représenté, deux actionneurs sont disposés de part et d'autre de la zone sensible, et l'unité de commande envoie des signaux à des fréquences différentes pour obtenir l'action anti-fouling et l'action de détection. Par exemple, les actionneurs sont actionnés à basse fréquence pour l'action anti-fouling et l'un des actionneurs est excité à haute fréquence pour générer une onde propagative dans la zone sensible. En variante, des paires de peignes interdigités forment à la fois des moyens anti-fouling et les moyens de détection.

Dans un autre exemple représenté sur la figure 5, les moyens de détection 6' fonctionnent en mode résonateur, i.e. ils génèrent des ondes stationnaires dans la zone sensible 8 et mesurent la variation de fréquence de résonance.

Dans cet exemple, le capteur comporte des actionneurs formant les moyens anti-encrassement 4 similaires à ceux de la figure 1, et des moyens de détection 6' comportant une paire de peignes interdigités 15 disposés à l'aplomb de la zone sensible 8, qui génère, dans la zone sensible 8 une onde de surface stationnaire, et qui mesure également la variation de fréquence de résonance de l'onde émise. En variante on peut effectuer un suivi du facteur de qualité en plus ou à la place d'un suivi de la fréquence de résonance. Le suivi du facteur de qualité offre en outre l'avantage d'accéder à d'autres caractéristiques, telles que le module d'Young des particules détectées ou leur degré d'hydratation.

Dans les exemples décrits, le support et la zone sensible sont de forme rectangulaire, mais il sera compris qu'un support et/ou une zone sensible de toute autre forme ne sort pas du cadre de la présente invention. Par exemple le support peut être en forme de disque et une zone sensible en forme de disque est définie, en utilisant des actionneurs en forme de disque, d'anneau ou d'arc de cercle.

Un exemple de fonctionnement du capteur environnemental de la figure 1, va maintenant être décrit.

Le capteur environnemental est immergé et les moyens anti-encrassement 4 et les moyens de détection 6 sont à l'arrêt. Le support 2 est immobile.

Une phase de désencrassement est commandée. L'unité de commande UC applique un signal électrique sur la paire d'actionneurs, par exemple un signal électrique alternatif, de préférence à la fréquence de résonance du mode recherché, par exemple du mode de Lamb. En variante, un balayage en fréquence dans une gamme de fréquence mettant en jeu les différents modes recherchés est appliqué pour réaliser un désencrassement uniforme de la zone sensible. Le support est alors mis en vibration, imprimant une accélération aux microorganismes présents sur la zone sensible, qui sont alors éjectés, et empêchant le développement de microorganismes. Les moyens anti-encrassement peuvent être actionnés pour effectuer une action préventive ou curative.

Les moyens anti-encrassement sont activés de manière discontinue, par exemple de manière périodique. A titre d'exemple, ils peuvent être activés une fois par heure, ou une fois par jour. La fréquence d'activation, la durée d'activation ainsi que l'amplitude et/ou la fréquence des vibrations sont choisies en fonction de l'aptitude du liquide à former un biofilm et/ou l'aptitude de la surface sensible à se faire recouvrir par des microorganismes. Les moyens anti-encrassement peuvent être activés uniquement lors d'un cycle de mesure, préalablement à la phase de mesure, ou de manière périodique avec une fréquence plus élevée que les phases de mesure.

Il est à noter que la sédimentation des particules d'intérêt sur la zone sensible 8 est plus rapide que la formation du film de biofouling sur cette zone.

Ensuite, l'unité de commande UC arrête les moyens anti-encrassement et lance une phase de détection. Notamment les moyens anti-encrassement sont arrêtés lors des phases de mesure pour ne pas perturber les mesures, notamment pour ne pas éjecter les particules d'intérêt pendant la mesure.

L'unité de commande UC lance ensuite une phase de mesure, elle envoie alors un signal aux moyens de détection pour générer une onde de surface dans la zone sensible. Préalablement, une phase de sédimentation peut être prévue pour permettre aux espèces d'intérêt en suspension dans le liquide de sédimenter sur la zone sensible 8. Cette sédimentation peut être passive, le capteur est en sommeil ou, comme cela sera décrit ci-dessous, la sédimentation peut être active, les actionneurs des moyens d'anti-encrassement étant commandés pour guider la sédimentation.

L'unité de commande envoie un signal électrique dans l'émetteur 12 qui génère une onde propagative P, par exemple une onde de Love ou de Rayleigh. L'onde se propage dans la zone sensible 8 en direction du récepteur 14, cette onde est impactée par l'environnement, c'est-à-dire impactée par la présence ou non des espèces chimiques ou des bactéries à détecter sur la zone sensible 8. La lecture du signal par le récepteur 14, résultant de l'arrivée de l'onde générée et impactée par l'environnement, permet de caractériser la masse d'objets biologiques qui s'est greffée à la zone sensible du capteur durant le temps de la sédimentation et de la mesure.

La durée de la mesure est inférieure au temps requis pour que se forme un biofilm susceptible de fausser la mesure de détection des particules d'intérêt. Par exemple la phase de mesure dure une quinzaine de minutes, et la durée de formation d'un film de biofouling pouvant perturber la mesure serait de l'ordre de plusieurs heures ou dizaines d'heures...

Dans l'exemple de la figure 5, dans lequel l'onde générée est une onde stationnaire, celle-ci est maintenue en excitation pendant tout le temps de la mesure et la fréquence de cette onde est mesurée. Lors du greffage d'espèces biologiques sur la zone sensible, la fréquence de résonance varie, en général diminue du fait de cette masse supplémentaire greffée, ce qui constitue le signal utile de détection.

L'unité de commande arrête les moyens de détection. Ceux-ci peuvent être activés de manière périodique. A titre d'exemple, ils peuvent être activés une fois par heure, ou une fois par jour, pour effectuer un suivi de la qualité du liquide dans lequel le capteur est immergé.

Les moyens anti-encrassement peuvent être activés à la fin de la mesure pour éjecter les cellules d'intérêt ou celles-ci seront éjectées lors de la prochaine phase de retrait du biofilm.

Dans un autre exemple de réalisation, la détection d'objets chimiques ou biologiques en milieu liquide peut être obtenue par un autre type de capteur biologique, qui est fixé sur le support dans la zone sensible 8. Par exemple, un capteur graphène peut être utilisé ; celui-ci est capable de détecter le greffage d'espèces biologiques via leur charge. Par exemple le graphène est sur la zone sensible.

En variante, on peut envisager de mettre en oeuvre plusieurs capteurs de type différent, par exemple un capteur à ondes de surface et un capteur graphène, chacun occupant une partie de la zone sensible, et/ou un capteur de type de transistor à effet de champ sensible aux variations de concentration en ions ou ISFET (Ion sélective field effect transistor) tel que décrit dans le document « A Scalable ISFET Sensing and Memory Array With Sensor Auto-Calibration for On-Chip Real-Time DNA Détection », Nicolas Moser et al. in IEEE TRANSACTIONS ON BIOMEDICAL CIRCUITS AND SYSTEMS, VOL. 12, NO. 2, APRIL 2018, et/ou un capteur électrochimique, tel que décrit dans le document « Aptamer-Based Electrochemical Biosensorfor Interferon Gamma Détection », Ying Liu et al. in Anal. Chem. 2010, 82, 8131-8136.

Le capteur peut également permettre de mesurer la densité et/ou la viscosité du liquide en mesurant la fréquence de résonance et le facteur de qualité de la plaque en vibration en interaction avec le milieu liquide, notamment lorsque des ondes de Lamb sont mises en oeuvre. La zone sensible est formée par la plaque vibrante elle-même. Des équations permettent de déterminer densité/viscosité en fonction de la mesure vibratoire. Cette détermination est par exemple décrite dans le document Neff et al. « Piezoelectric Actuated Glass Plate for Liquid Density and Viscosity Measurement », Micromachines Journal, 11, 248, doi:1 0.3390jmi11 040348.

Dans un mode de fonctionnement du capteur, on peut prévoir de pouvoir guider les espèces se trouvant dans le liquide de sorte à localiser leur fixation sur la zone sensible. Par exemple les cellules d'intérêt sont guidées vers les ventres de vibration, i.e. les zones de plus forte amplitude de la plaque, selon le mode de la structure vibrante. Cette localisation peut être sous forme de bande comme cela est représenté sur la figure 6 sur une plaque en verre de 40 mm $\times$ 30 mm, la plaque étant excitée dans le mode de Lamb à une fréquence de l'ordre de 100kHz, et la localisation peut être de toute autre forme sur une membrane sous forme de disque de rayon 800μm, telle que représenté sur les images de la figure 7 excités dans le 1er mode hors plan, les fréquences d'excitation étant indiquées à côté de chaque image.

L'unité de commande UC, dans un mode de localisation des espèces d'intérêt, est configurée pour activer les actionneurs de sorte à mettre en vibration le support 4 selon un mode d'onde stationnaire présentant une longueur d'onde λ supérieure à la taille des cellules d'intérêt.

Comme expliqué ci-dessus, la plaque actionnée selon un mode stationnaire, par exemple un mode de Lamb, va se déformer et présenter des zones se déplaçant avec une amplitude maximale, désignées « ventres », et des zones fixes désignées « noeuds ». Les noeuds restent dans le plan de la plaque, le plan de la plaque contenant la plaque au repos.

La longueur d'onde de la déformée est désignée λ et couvre un ventre et un creux. En mode de fonctionnement assurant la localisation des espèces d'intérêt, la longueur d'onde de l'onde stationnaire de la déformée de la plaque est comprise entre 3 à 20 fois la taille de la cellule, préférentiellement elle est égale à 10 fois la taille de la cellule. De préférence, les actionneurs présentent une largeur sensiblement égale à la taille d'un ventre.

L'amplitude du mode de résonance est suffisante pour déplacer le liquide et donc les cellules en suspension dans celui-ci. Typiquement l'amplitude est comprise entre quelques dizaines de nm et quelques micromètres.

L'emplacement des actionneurs et leur taille peuvent être déterminés en utilisant un logiciel de calcul par éléments finis, tel que COMSOL®, ANSYS® ou COVENTOR®, à partir de la déformée dans le mode de vibration choisi. La fréquence de résonance de ce mode et l'amplitude peuvent également être déterminées par simulation par éléments finis et/ou par calcul analytique. La fréquence et l'amplitude sont fonction de la tension appliquée aux actionneurs.

La détermination des actionneurs peut être réalisée comme cela est expliqué dans le document Casset et al, « Low voltage actuated plate for haptic applications with PZT thin-film », Proceedings of Transducers 2013.

L'activation des actionneurs a lieu pendant la sédimentation et avant l'adhérence des cellules sur la surface d'accueil. Les actionneurs peuvent être activés avant l'injection des cellules.

Les cellules C se répartissent alors au-dessus de la surface d'accueil 8 et plus particulièrement au-dessus des ventres de vibration de la surface sensible 8 et s'éloignent des noeuds de vibrations. Les espèces viennent sédimenter sur la surface sensible 8 et adhèrent à celle-ci. En variante, les actionneurs peuvent être activés jusqu'à la sédimentation de toutes les espèces ou être arrêtés au cours de la sédimentation.

La disposition des actionneurs de la figure 1 permet une localisation des cellules en ligne le long des ventres.

En modifiant la forme et la répartition des actionneurs d'autres localisations sont réalisables. Par exemple, en répartissant les actionneurs en quadrillage et en choisissant un mode d'actionnement en forme de damier, les cellules sont localisées en forme de damier.

On peut envisager de localiser différentes cellules successivement selon des motifs différents en modifiant les modes d'actionnement de la plaque. Par exemple les cellules sont injectées successivement dans la cavité fluidique, à chaque injection le mode d'actionnement est modifié. Les dépôts localisés de cellules réalisés successivement sont possibles car la migration des cellules n'est pas un phénomène instantané.

Cette possibilité de localisation de particules est également décrite dans le document G. Vuillermet et al. « Inverse Chladni patterns in liquids at microscale », Physical Review Letters 116(18) May 2016.

A titre d'exemple, nous allons décrire des exemples de dimensionnement des actionneurs 10 de moyens anti-encrassement.

Les forces d'adhésion des organismes sur la zone sensible sont variables en fonction de l'organisme considéré. Nous considérons les cellules biologiques adhérentes pour lesquelles les forces d'adhésion sont comprises entre 1 nN et 500 nN. En estimant la masse d'une cellule eucaryote ~ 1 ng, on peut évaluer les ordres de grandeurs de fréquences nécessaires de vibration de la plaque vibrante à partir de la formule :

$$f \approx \frac{1}{2\pi}\sqrt{\frac{F_{adh}}{m\delta}}$$

Avec une amplitude de vibration δ~1μm, on obtient un ordre de grandeur des fréquences minimales à mettre en jeu de l'ordre de 1kHz à de l'ordre de 10 kHz. Les supports des figures 2A à 2C, présentent des fréquences simulées dans cette gamme.

Le dimensionnement des actionneurs dans un mode de fonctionnement en mode de Lamb est par exemple décrit dans le document Casset et al, « Low voltage actuated plate for haptic applications with PZT thinfilm », Proceedings of Transducers 2013, PRL 116, 184501 (2016), pages 1 -5.

Cette configuration d'actionneurs permet d'avoir une amplitude de vibration et donc une cartographie de force homogène sur la surface. Les actionneurs seront positionnés de façon à favoriser le ou les modes recherchés.

Par exemple, deux colonnes d'actionneur de 1500 μm de large, et positionnés à 2200 μm de l'extrémité de la plaque permettent d'obtenir l'amplitude de déformation voulue pour la fréquence indicative de 175kHz. Des actionneurs de 2000 μm de large, le premier posi-

tionné à 4250 μm de l'extrémité de la plaque, et le second espacé du premier de 17350 μm, permet d'obtenir un mode à une fréquence de 64kHz.

La mise en oeuvre de plusieurs actionneurs permet d'obtenir de plus grandes amplitudes de vibration. Néanmoins, des moyens anti-encrassement utilisant un seul actionneur sont envisageables.

De manière non limitative, les actionneurs peuvent être positionnés proches du ou des bords extérieurs du support, ou être localisés sur deux ventres de vibration consécutifs.

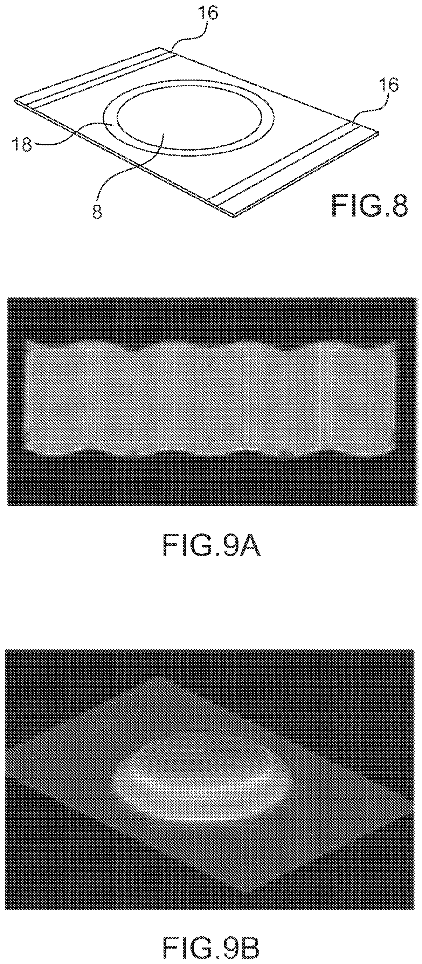

Par ailleurs, afin d'exciter le support selon plusieurs modes, un seul actionneur peut être utilisé, ou alors plusieurs jeux d'actionneurs sont utilisés générant chacun un ou plusieurs modes. Par exemple, sur la figure 8, les moyens anti-encrassement comportent une paire de premiers actionneurs 16 sous forme de bande s'étendant de part et d'autre de la zone sensible et parallèlement à deux bords opposés et un deuxième actionneur 18 en forme d'anneau entourant la zone sensible 8. Les premiers actionneurs peuvent exciter la zone sensible suivant un mode de Lamb (figure 9A) et le deuxième actionneur peut exciter la zone sensible selon un premier mode hors plan (fig. 9B). Il est à noter que le deuxième actionneur permet une localisation de la déformation hors-plan à la zone entourée par le deuxième actionneur.

En variante, les moyens anti-encrassement et les moyens de détection sont portés par des faces opposées du support.

L'invention permet de réaliser des capteurs de grandes dimensions qui sont définies par les dimensions du support. Il est donc possible d'analyser de grands volumes de liquide.

Un exemple de procédé de fabrication d'un capteur environnement représenté sur la figure 1 va maintenant être décrit.

Sur un substrat 100, par exemple en semi-conducteur tel que le silicium ou en verre, on forme un empilement piézoélectrique, par exemple comprenant une couche de AlN 104 entre deux couches de Mo 102 et 106. Cet empilement est formé par exemple par dépôt pleine plaque en utilisant une technique de pulvérisation. Par exemple la couche d'AlN a une épaisseur de 2 μm et les couches de Mo ont une épaisseur de 200 nm.

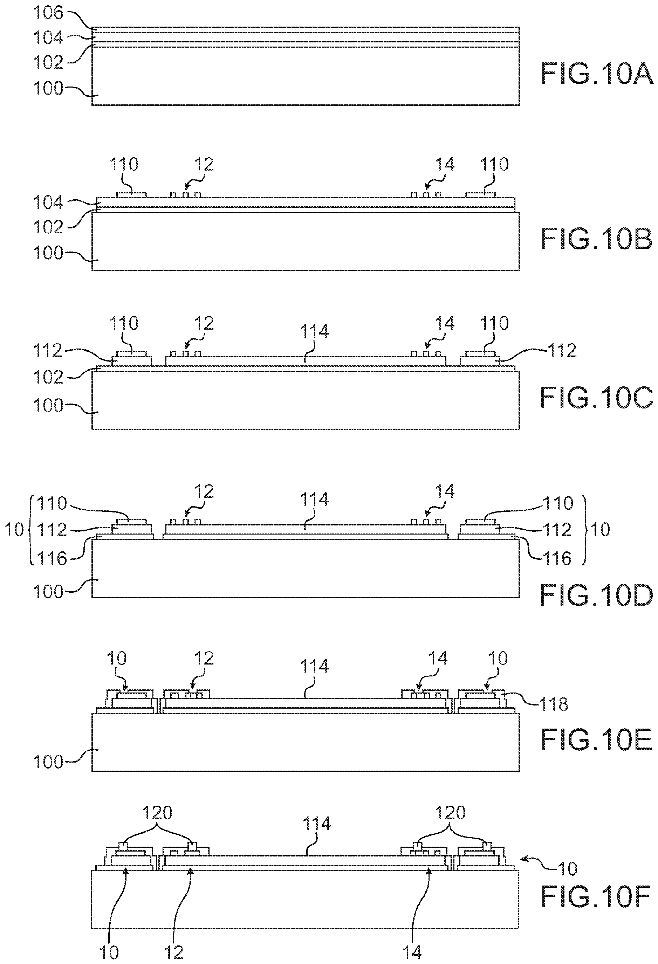

L'élément ainsi formé est représenté sur la figure 10A.

Lors d'une étape suivante, la couche 106 est structurée, par exemple par gravure, pour former les électrodes 110 des actionneurs 10 des moyens d'anti-fouling 4 et les électrodes interdigités formant émetteur 12 et récepteur 14 des moyens de détection 6. Pour cela il est possible d'utiliser des étapes de gravure chimique ou de gravure plasma.

L'élément ainsi formé est représenté sur la figure 10B.

Lors d'une étape suivante, la couche d'AlN 104 est structurée afin de séparer les éléments piézoélectriques 112 de moyens d'anti-fouling et la couche piézoélectrique 114 formant la base de la zone sensible 8. Par exemple la couche 104 est gravée par exemple par gravure chimique.

L'élément ainsi formé est représenté sur la figure 1OC.

Lors d'une étape suivante, la couche 102 est structurée, par exemple gravée, afin de former les électrodes 116 des moyens d'anti-fouling. La couche 116 est présente sous les moyens de détection mais n'est pas utilisée comme électrode.

L'élément ainsi formé est représenté sur la figure 10D.

Lors d'une étape suivante, une couche de passivation 118 est formée sur tout l'élément de la figure 10D, afin d'isoler les actionneurs de l'environnement extérieur. Le matériau de passivation est par exemple du $SiO_2$. La couche de passivation 118 a par exemple une épaisseur de 300 nm. La couche de passivation 118 est ouverte, par exemple par gravure, au droit des électrodes pour permettre leur raccordement électrique ultérieur. Dans cet exemple la couche de passivation 118 a été gravée sur la zone sensible. En variante, la couche de passivation 118 peut être conservée sur la zone sensible.

L'élément ainsi formé est représenté sur la figure 10E.

Lors d'une étape suivante, on réalise les lignes et plots de connexion 120 dans les portions ouvertes de la couche de passivation, par exemple par dépôt d'une couche d'or et gravure de celle-ci. La couche d'or a par exemple une épaisseur de 500 nm.

L'élément ainsi formé est représenté sur la figure 10F.

De préférence, plusieurs capteurs sont réalisés simultanément sur le même substrat, puis sont individualisés, par exemple par découpe.

**Revendications**

1. Procédé de commande d'un capteur environnemental immergé comportant un support (2), dont une face comporte une zone sensible (8) configurée pour recevoir au moins une espèce d'intérêt, des moyens anti-encrassement (4) configurés pour mettre en vibration au moins la zone sensible (8), lesdits moyens anti-encrassement (4) étant portés par le support (2), et des moyens de détection (6, 6') de la présence d'au moins une espèce d'intérêt sur la zone sensible (8), lesdits moyens de détection (6, 6') étant portés par le support (2), dans lequel les moyens anti-encrassement comportent des actionneurs configurés pour que le support vibre selon un mode stationnaire de longueur d'onde λ comprise entre 3 fois et 20 fois la taille donnée de l'espèce d'intérêt pour confiner l'espèce d'intérêt sur la zone sensible (8), ledit procédé comportant :

    - l'activation des moyens anti-encrassement dans un mode désencrassement,
- l'arrêt des moyens anti-encrassement,
- l'activation des moyens anti-encrassement pour confiner au moins une espèce d'intérêt sur la zone sensible,
- l'arrêt des moyens anti-encrassement,
- l'activation des moyens de détection,
- l'arrêt de moyens de détection.

2.    Procédé selon la revendication 1, dans lequel les moyens anti-encrassement (4) sont configurés pour mettre en vibration au moins la zone sensible (8) dans un mode de vibration hors-plan.

3.    Procédé selon la revendication 1 ou 2, dans lequel les moyens anti-encrassement (4) sont configurés pour mettre en vibration au moins la zone sensible (8) dans un mode de plaque, par exemple un mode de Lamb.

4.    Procédé selon l'une des revendications 1 à 3, dans lequel les moyens de détection (6) sont configurés pour mettre en oeuvre des ondes de surface.

5.    Procédé selon la revendication 4, dans lequel les moyens de détection (6) comportent un émetteur (12) d'ondes de surface propagatives disposé d'un côté de la zone sensible (8) et un récepteur (14) d'ondes de surface propagatives émises par l'émetteur (12) disposés d'un autre côté de la zone sensible (8).

6.    Procédé selon la revendication 4, dans lequel les moyens de détection (6') comportent des moyens pour générer une onde stationnaire dans la zone sensible et pour mesurer une variation de la fréquence de résonance de l'onde stationnaire.

7.    Procédé selon l'une des revendications 1 à 6, dans lequel les moyens de détection comportent également sur la zone sensible un capteur graphène, et/ou un capteur de type de transistor à effet de champ sensible aux variations de concentration en ions, et/ou un capteur électrochimique.

8.    Procédé selon l'une des revendications précédentes, comportant des moyens formant à la fois les moyens anti-encrassement et les moyens de détection.

9.    Procédé selon l'une des revendications précédentes, dans lequel la zone sensible (8) comporte une couche de fonctionnalisation configurée pour capturer la au moins une espèce d'intérêt.

10.    Procédé selon l'une des revendications précédentes, dans lequel ledit capteur environnemental fait partie d'un système de détection au moins en partie immergé comportant une unité de commande (UC) configurée pour envoyer un premier signal de commande aux moyens anti-encrassement (4) de sorte à retirer des microorganismes sur la zone sensible (8) et/ou empêcher leur prolifération sur la zone sensible, et un deuxième signal de commande aux moyens de détection (6) pour effectuer une détection de la au moins une espèce d'intérêt.

11.    Procédé selon la revendication précédente en combinaison avec la revendication 3, dans lequel l'unité de commande (UC) est configurée pour appliquer aux moyens anti-encrassement un balayage en fréquence dans une gamme de fréquence excitant le support (2) suivant différents modes de Lamb.

12.    Procédé selon la revendication 10 ou 11 en combinaison avec la revendication 5, dans lequel ladite unité de commande est configurée pour collecter un signal émis par les deuxièmes moyens.

13.    Procédé selon l'une des revendications 10 à 12, dans lequel ladite unité de commande est configurée pour activer les moyens anti-encrassement (4) de sorte à confiner ladite au moins une espèce d'intérêt sur la zone sensible.

14.    Procédé selon l'une des revendications précédentes, dans lequel l'activation des moyens anti-encrassement en mode désencrassement, le cas échéant au moyen de l'unité de commande (UC), a lieu préalablement à chaque activation des moyens de détection.

15.    Procédé selon l'une des revendications précédentes, en combinaison avec la revendication 5, comportant l'application aux moyens anti-encrassement d'un balayage en fréquence dans une gamme de fréquence excitant le support (2) suivant différents modes de Lamb.

**Patentansprüche**

1.    Verfahren zum Steuern eines eingetauchten Umgebungssensors, einen Träger (2) enthaltend, dessen eine Fläche einen empfindlichen Bereich (8) enthält, der konfiguriert ist, um mindestens eine Spezies von Interesse, von Antifäulnismitteln (4), zu empfangen, die konfiguriert sind, um mindestens den empfindlichen Bereich (8) in Schwingung zu versetzen, wobei die Antifäulnismittel (4) vom Träger (2) getragen werden, und Mittel zum Detektieren (6, 6') des Vorhandenseins mindestens einer Spezies von Interesse auf dem empfindlichen Bereich (8), wobei die Detektionsmittel (6, 6') vom Träger (2) getragen werden, wobei die Antifäulnismittel Aktuatoren enthalten, die so konfiguriert sind, dass der Träger in einem stehenden Modus mit einer Wellenlänge λ zwischen dem 3- und 20-fachen der gegebenen Größe der Spezies von Interesse vibriert, um die Spezies von Interesse auf den empfindlichen Bereich (8) zu beschränken, wobei das Verfahren enthält:

- die Aktivierung der Antifäulnismittel in einem Säuberungsmodus,
- das Stoppen der Antifäulnismittel,
- die Aktivierung der Antifäulnismittel, um mindestens eine Spezies von Interesse auf den empfindlichen Bereich zu beschränken,
- das Stoppen der Antifäulnismittel,
- die Aktivierung der Detektionsmittel,
- das Stoppen der Detektionsmittel.

2. Verfahren nach Anspruch 1, wobei die Antifäulnismittel (4) konfiguriert sind, um mindestens den empfindlichen Bereich (8) in einem Modus der Vibration außerhalb der Ebene in Schwingung zu versetzen.

3. Verfahren nach Anspruch 1 oder 2, wobei die Antifäulnismittel (4) konfiguriert sind, um mindestens den empfindlichen Bereich (8) in einem Plattenmodus, beispielsweise einem Lamb-Modus, in Schwingung zu versetzen.

4. Verfahren nach einem der Ansprüche 1 bis 3, wobei die Detektionsmittel (6) konfiguriert sind, um Oberflächenwellen zu implementieren.

5. Verfahren nach Anspruch 4, wobei die Detektionsmittel (6) einen Emitter (12) von sich ausbreitenden Oberflächenwellen enthalten, der auf einer Seite des empfindlichen Bereichs (8) angeordnet ist, und einen Empfänger (14) von sich ausbreitenden Oberflächenwellen, die vom Emitter (12) emittiert werden, der auf einer anderen Seite des empfindlichen Bereichs (8) angeordnet ist.

6. Verfahren nach Anspruch 4, wobei die Detektionsmittel (6') Mittel zum Erzeugen einer stehenden Welle im empfindlichen Bereich enthalten, und zum Messen einer Änderung der Resonanzfrequenz der stehenden Welle.

7. Verfahren nach einem der Ansprüche 1 bis 6, wobei die Detektionsmittel auf dem empfindlichen Bereich auch einen Graphen-Sensor enthalten, und/oder einen Feldeffekttransistor-Sensor, der auf Änderungen der Ionenkonzentration empfindlich ist, und/oder einen elektrochemischen Sensor.

8. Verfahren nach einem der vorhergehenden Ansprüche, Mittel enthaltend, die sowohl die Antifäulnismittel als auch die Detektionsmittel bilden.

9. Verfahren nach einem der vorhergehenden Ansprüche, wobei der empfindliche Bereich (8) eine Funktionalisierungsschicht enthält, die konfiguriert ist, um die mindestens eine Spezies von Interesse zu erfassen.

10. Verfahren nach einem der vorhergehenden Ansprüche, wobei der Umgebungssensor Teil eines mindestens teilweise eingetauchten Detektierungssystems ist, das eine Steuereinheit (UC) enthält, die konfiguriert ist, um ein erstes Steuersignal an die Antifäulnismittel (4) zu senden, so dass Mikroorganismen auf dem empfindlichen Bereich (8) entfernt werden und/oder deren Proliferation auf dem empfindlichen Bereich verhindert wird, und ein zweites Steuersignal an die Detektionsmittel (6), um eine Detektion der mindestens einen Spezies von Interesse durchzuführen.

11. Verfahren nach dem vorhergehenden Anspruch in Kombination mit Anspruch 3, wobei die Steuereinheit (UC) konfiguriert ist, um auf die Antifäulnismittel einen Frequenz-Sweep in einem Frequenzbereich anzuwenden, der den Träger (2) in verschiedenen Lamb-Modi anregt.

12. Verfahren nach Anspruch 10 oder 11 in Kombination mit Anspruch 5, wobei die Steuereinheit konfiguriert ist, um ein Signal aufzufangen, das von den zweiten Mitteln emittiert wird.

13. Verfahren nach einem der Ansprüche 10 bis 12, wobei die Steuereinheit konfiguriert ist, um die Antifäulnismittel (4) zu aktivieren, um die mindestens eine Spezies von Interesse auf den empfindlichen Bereich zu beschränken.

14. Verfahren nach einem der vorhergehenden Ansprüche, wobei die Aktivierung der Antifäulnismittel im Säuberungsmodus, gegebenenfalls im Mittel der Steuereinheit (UC), vor jeder Aktivierung der Detektionsmittel erfolgt.

15. Verfahren nach einem der vorhergehenden Ansprüche, in Kombination mit Anspruch 5, die Anwendung eines Frequenz-Sweeps auf die Antifäulnismittel in einem Frequenzbereich enthaltend, der den Träger (2) in verschiedenen Lamb-Modi anregt.

## Claims

1. A method for controlling a submerged environmental sensor including a support (2), one face of which includes a sensitive zone (8) configured to receive at least one species of interest, anti-fouling means (4) configured to cause at least the sensitive zone (8) to vibrate, said anti-fouling means (4) being carried by the support (2), and detection means (6, 6') for detecting the presence of at least one species of interest on the sensitive zone (8), said detection means (6, 6') being carried by the support (2), wherein the anti-fouling means include actuators configured to cause the support to vibrate in a standing mode with wavelength $\lambda$ between 3 times and 20 times the given size of the species of interest to confine the species of interest on the sensitive zone (8), said method including:

- activating the anti-fouling means (4) in a defouling mode,
- stopping the anti-fouling means (4),
- activating the anti-fouling means (4) to confine the at least one species of interest in the sensitive zone,
- stopping the anti-fouling means (4),
- activating the detection means (6, 6'),
- stopping the detection means (6, 6').

2. The method according to claim 1, wherein the anti-fouling means (4) are configured to cause at least the sensitive zone (8) to vibrate in an out-of-plane vibration mode.

3. The method according to claim 1 or 2, wherein the anti-fouling means (4) are configured to cause at least the sensitive zone (8) to vibrate in a plate mode, for example a Lamb mode.

4. The method according to any one of claims 1 to 3, wherein the detection means (6) are configured to implement surface waves.

5. The method according to claim 4, wherein the detection means (6) include an emitter (12) of propagating surface waves disposed on one side of the sensitive zone (8) and a receiver (14) of propagating surface waves emitted by the emitter (12) disposed on another side of the sensitive zone (8).

6. The method according to claim 4, wherein the detection means (6') includes means for generating a standing wave in the sensitive zone and for measuring a variation in the resonant frequency of the standing wave.

7. The method according to any one of claims 1 to 6, wherein the detection means also include on the sensitive zone a graphene sensor, and/or an Ion Selective Field Effect Transistor type sensor, and/or an electrochemical sensor.

8. The method according to any of the preceding claims, including means forming both the anti-fouling means and the detection means.

9. The method according to any of the preceding claims, wherein the sensitive zone (8) includes a functionalisation layer configured to capture the at least one species of interest.

10. The method according to any of the preceding claims, wherein said environmental sensor is part of an at least partly submerged detection system including a control unit (UC) configured to send a first control signal to the anti-fouling means (4) so as to remove micro-organisms from the sensitive zone (8) and/or prevent their proliferation on the sensitive zone, and a second control signal to the detection means (6) to perform detection of the at least one species of interest.

11. The method according to the preceding claim in combination with claim 3, wherein the control unit (CU) is configured to apply frequency sweep to the anti-fouling means in a frequency range exciting the medium (2) in different Lamb modes.

12. The method according to claim 10 or 11 in combination with claim 5, wherein said control unit is configured to collect a signal emitted from the second means.

13. The method according to any one of claims 10 to 12, wherein said control unit is configured to activate the anti-fouling means (4) so as to confine said at least one species of interest on the sensitive zone.

14. The method according to any one of the preceding claims, wherein activating the anti-fouling means in de-fouling mode, if applicable by means of the control unit (UC), takes place prior to each activation of the detection means.

15. The method according to any one of the preceding claims, in combination with claim 5, including applying frequency sweep to the antifouling means in a frequency range exciting the support (2) in different Lamb modes.

FIG.1

FIG.3

EP 4 168 791 B1

FIG.2A

FIG.2B

FIG.2C

14

FIG.4

FIG.5

FIG.6

FIG.7

FIG.8

FIG.9A

FIG.9B

106
104
102
100

FIG.10A

110    12                        14    110

104
102
100

FIG.10B

110    12              114        14    110
112                                         112
102
100

FIG.10C

12              114        14
110                                         110
10 { 112                                         112 } 10
116                                         116
100

FIG.10D

10    12              114        14    10
118

100

FIG.10E

120              114              120

10
10    12                        14

FIG.10F

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8018 A
- US 121 B1
- US 20060032290 A1
- EP 3715826 A1

**Littérature non-brevet citée dans la description**

- **HALLILI et al.** Conception et simulation d'un micro-capteur à ondes de love par éléments finis. *J3eA,* Janvier 2015, http://dx.doi.org/10.1051/j3ea/2015018
- **NATALIJA BACKMANN et al.** A label-free immunosensor array using single-chain antibody fragments. *PNAS,* 11 Octobre 2005, vol. 102 (41), 14587-14592
- **ABD-ELGAWAD RADIA.** An electrochemical immunosensor for ochratoxin A based on immobilization of antibodies on diazonium-functionalized gold electrode. *Electrochimica Acta,* 2009, vol. 54, 2180-2184
- **HAIYING YANGA et al.** Detection of Escherichia coli with a label-free impedimetric biosensorbased on lectin functionalized mixed self-assembled monolayer. *Sensors and Actuators,* 2016, vol. 8 (229), 297-304
- **NICOLAS MOSER et al.** A Scalable ISFET Sensing and Memory Array With Sensor Auto-Calibration for On-Chip Real-Time DNA Détection. *IEEE TRANSACTIONS ON BIOMEDICAL CIRCUITS AND SYSTEMS,* Avril 2018, vol. 12 (2
- **YING LIU et al.** Aptamer-Based Electrochemical Biosensorfor Interferon Gamma Détection. *Anal. Chem.,* 2010, vol. 82, 8131-8136
- **NEFF et al.** Piezoelectric Actuated Glass Plate for Liquid Density and Viscosity Measurement. *Micromachines Journal,* vol. 11, 248
- **CASSET et al.** Low voltage actuated plate for haptic applications with PZT thin-film. *Proceedings of Transducers,* 2013
- **G. VUILLERMET et al.** Inverse Chladni patterns in liquids at microscale. *Physical Review Letters,* Mai 2016, vol. 116 (18
- **CASSET et al.** Low voltage actuated plate for haptic applications with PZT thin-film. *Proceedings of Transducers 2013, PRL,* 2016, vol. 116 (184501), 1-5